# EUROPÄISCHE PATENTANMELDUNG

(11) **EP 2 194 077 A1**
(43) Veröffentlichungstag der Anmeldung: **09.06.2010**
(21) Anmeldenummer: 08170971.9
(22) Anmeldetag: 08.12.2008
(51) Int. Cl.: C08F 290/06, C08F 290/14, C08F 222/00, C08F 220/00, C08F 216/00

(54) **Verfahren zur Herstellung von wässrigen Copolymerzubereitungen**

(71) Anmelder: Construction Research and Technology GmbH, 83308 Trostberg (DE)
(72) Erfinder: Vierle, Mario, 83512, Wasserburg (DE); Scholz, Christian, 83308, Trostberg (DE)

(57) **Zusammenfassung**

Die Erfindung betrifft ein Verfahren zur Herstellung eines Copolymer enthaltenden wässrigen Mediums in einem Polymerisationsreaktor, welcher mit Säuremonomer, Polyethermakromonomer, Wasser sowie radikalischen Polymerisationsinitiator befüllt wird, so dass in dem Polymerisationsreaktor das wässrige Medium entsteht, in welchem Säuremonomer und Polyethermakromonomer unter Bildung des Copolymers durch radikalische Polymerisation umgesetzt werden, pro eingesetztem Mol Polyethermakromonomer insgesamt 1 bis 20 Mol Säuremonomer eingesetzt werden, das Gewichtsverhältnis von eingesetztem Polyethermakromonomer zu eingesetztem Wasser 5 : 1 bis 1 : 5 beträgt, wobei mindestens 70 Gew.-% des in dem Polymerisationsreaktor vorgelegten Wassers als in der Natur vorkommendes Wasser bereitgestellt wird, welches einen verhältnismäßig geringen Anteil an Magnesiumionen und Chloridionen aufweist.

## Beschreibung

Die vorliegende Erfindung betrifft ein Verfahren zur Herstellung eines Copolymers enthaltenden wässrigen Mediums, das Copolymer enthaltende wässrige Medium sowie dessen Verwendung.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere wässrige Copolymerlösungen eingesetzt, welche durch radikalische Copolymerisation von Säuremonomeren mit Polyethermakromonomeren in wässriger Lösung hergestellt werden.

In der Praxis erfolgt die Copolymerisation meist in der Semi-Batch-Fahrweise. Die WO 2005/075529 beschreibt ein semikontinuierliches Herstellungsverfahren für besagte Copolymere, in welchem das Polyethermakromonomer in wässriger Lösung vorgelegt wird und anschließend das Säuremonomer über die Zeit der Vorlage zudosiert wird. Obwohl das beschriebene Verfahren bereits kostengünstig ist und als Verfahrensprodukt Hochleistungsfließmittel erhalten werden, besteht weiterhin ein Bestreben, die Wirtschaftlichkeit des Verfahrens sowie Qualität des Verfahrensprodukts noch weiter zu verbessern.

Die der vorliegenden Erfindung zugrunde liegende Aufgabe ist es somit, ein wirtschaftliches Verfahren zur Herstellung einer Copolymer enthaltenden wässrigen Zubereitung bereit zu stellen, welche als Dispergiermittel für hydraulische Bindemittel, speziell als Fließmittel/Wasserreduktionsmittel, eine gute Performance zeigt.

Die Lösung dieser Aufgabe ist ein Verfahren zur Herstellung eines Copolymer enthaltenden wässrigen Mediums in einem Polymerisationsreaktor, welcher mit Säuremonomer, Polyethermakromonomer, Wasser sowie radikalischem Polymerisationsinitiator befüllt wird, so dass in dem Polymerisationsreaktor das wässrige Medium entsteht, in welchem Säuremonomer und Polyethermakromonomer unter Bildung des Copolymers durch radikalische Polymerisation umgesetzt werden, pro eingesetztem Mol Polyethermakromonomer insgesamt 1 bis 20 Mol Säuremonomer eingesetzt werden, das Gewichtsverhältnis von eingesetztem Polyethermakromonomer zu eingesetztem Wasser 5 : 1 bis 1 : 5 beträgt, wobei mindestens 70 Gew.-% des in dem Polymerisationsreaktor vorgelegten Wassers als in der Natur vorkommendes Wasser bereitgestellt wird, welches maximal 130 mg/L Magnesiumionen, maximal 350 mg/L Sulfationen und maximal 200 mg/ L Chloridionen aufweist.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Vinylester wie Ethylacrylat). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Stahl, insbesondere Reaktorstahl oder Lagerbehälterstahl, korrodiert über längere Zeitintervalle (von mehreren Jahren bzw. Jahrzehnte), wobei Wasser mit verhältnismäßig hohem Magnesium- und Chloridgehalte die Korrosion des Stahls (insbesondere über diese langen Zeitintervalle gesehen) begünstigt. Bei Einsatz des erfindungsgemäßen chlorid- und magnesiumarmen Wassers können weniger korrosionsresistente, d.h. preiswertere Stähle, als Reaktorstahl oder Lagerbehälterstahl eingesetzt werden. Andererseits kann auch gesagt werden, dass sich durch Einsatz des erfindungsgemäßen chlorid- und magnesiumarmen Wassers die Wartungsintervalle (z.B. die Entfernung von Korrosionsschichten) für Reaktoren, Lagerbehälter etc. verlängern, was insbesondere im Laufe von Jahren bzw. Jahrzehnten zu einer nicht zu vernachlässigenden Kostenersparnis führt. Häufig geraten die mit dem erfindungsgemäßen Verfahren hergestellten Dispergiermittel bzw. Fließmittel auch mit Metallen in Kontakt, wobei in dieser Hinsicht insbesondere die Anwendung in Zusammenhang mit Stahlbeton zu erwähnen ist.
Insbesondere über viele Jahre bzw. Jahrzehnte gesehen, bewirkt der Einsatz von chlorid- und magnesiumarmen Wasser im Allgemeinen eine geringere Korrosion des Metalls bzw. Stahls. Magnesiumreiches Wasser bewirkt außerdem in vielen Bindemittelsystemen häufig eine Verringerung der Festigkeit des ausgehärteten Bindemittels. Hohe Sulfatkonzentrationen des eingesetzten Wassers können hingegen die Wirkung des Dispergiermittels bzw. Fließmittels (letztendlich des Copolymers) in unerwünschter Weise verschlechtern. Obwohl der Einsatz von deionisiertem Wasser höchstwahrscheinlich auch zu guten Ergebnissen führt, ist der Einsatz von deionisiertem Wasser aufgrund der verhältnismäßig hohen Kosten für die Deionisierung für ein günstig bereitzustellendes Massenprodukt weniger geeignet. Das im erfindungsgemäßen Verfahren eingesetzte Wasser ist als in der Natur vorkommendes Wasser besonders kostengünstig. Resümierend kann gesagt werden, dass das erfindungsgemäße Verfahren wirtschaftlich ist und ein qualitativ hochwertiges Dispergiermittel bzw. Fließmittel hervorbringt.

Meist wird mindestens 80 Gew.-% des in dem Polymerisationsreaktor vorgelegten Wassers als in der Natur vorkommendes Wasser bereitgestellt, welches maximal 70 mg/l Magnesiumionen, maximal 100 mg/l Sulfat und maximal 100 mg/l Chlorid aufweist.

In der Regel ist der Polymerisationsreaktor teilweise oder vollständig aus Stahl ausgebildet, welcher mit dem wässrigen Medium Kontakt hat.

Normalerweise wird durch die Umsetzung des Säuremonomers eine Struktureinheit im Copolymer erzeugt, die gemäß einer der allgemeinen Formeln (Ia), (Ib), (Ic) und/oder (Id) ist 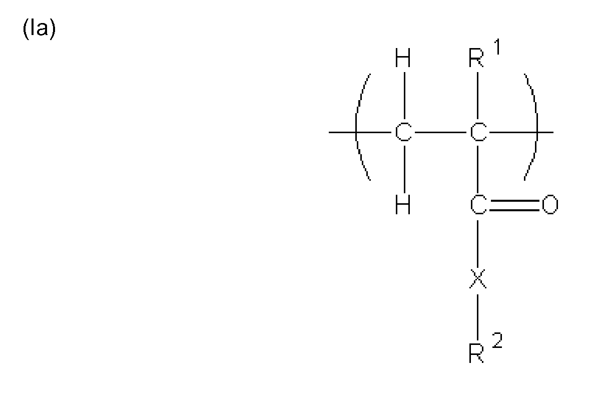 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 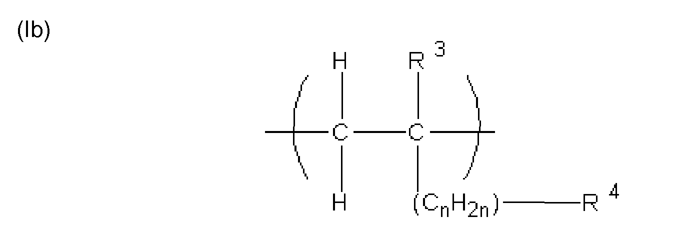 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 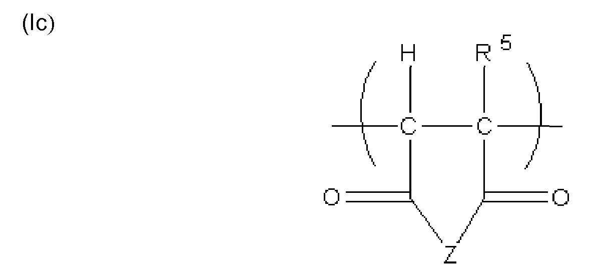 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 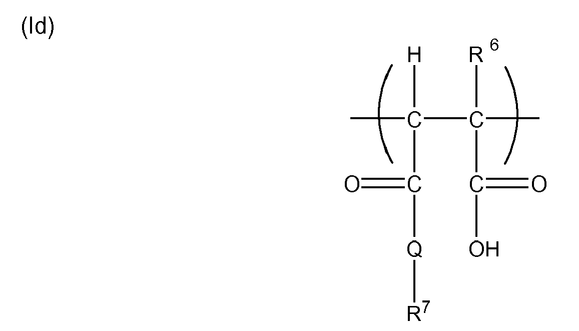 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Häufig wird als Säuremonomer Methacrylsäure, Acrylsäure, Maleinsäure, Maleinsäureanhydrid, ein Halbester der Maleinsäure oder eine Mischung aus mehreren dieser Komponenten eingesetzt.

In der Regel wird durch die Umsetzung des Polyethermakromonomers eine Struktureinheit im Copolymer erzeugt, die gemäß einer der allgemeinen Formeln (IIa), (IIb) und/oder (IIc) ist 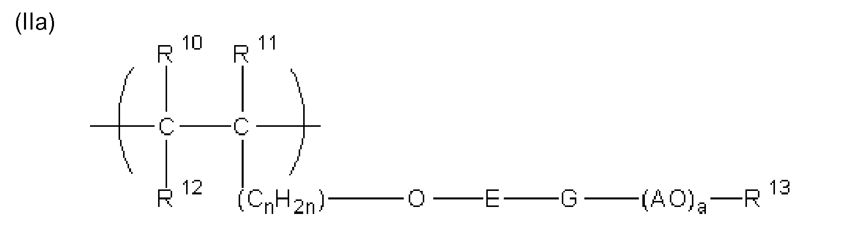 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 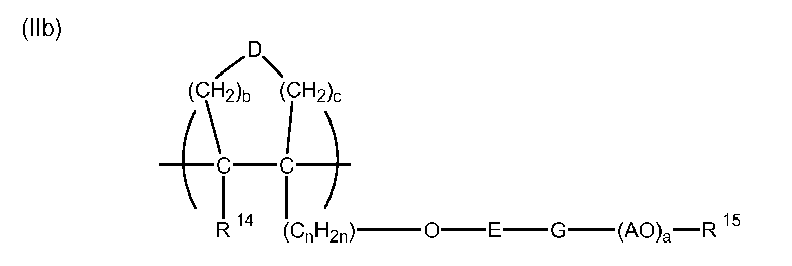 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 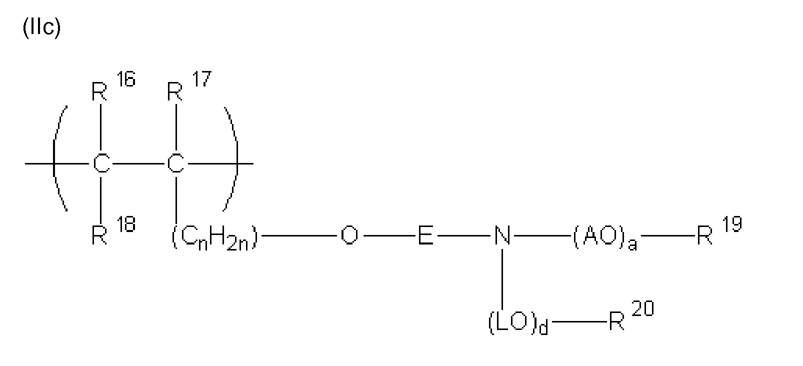 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Meist wird als Polyethermakromonomer alkoxylierter Hydroxybutylvinylether und/oder alkoxyliertes Isoprenol und/oder alkoxylierter (Meth)allylalkohol und/oder vinyliertes Methylpolyalkylenglykol und/order alkoxylierter Diethylenglykol mit bevorzugt jeweils einer arithmetisch mittleren Zahl an Oxyalkylengruppen von 4 bis 300 eingesetzt.

Typischerweise wird als radikalischer Polymerisationsinitiator ein H₂O₂ oder Alkaliperoxodisulfat enthaltendes Redoxinitiatorsystem eingesetzt, welches zusammen mit einem Reduktionsmittel verwendet wird, wobei das Reduktionsmittel bevorzugt vorliegt in Form von Natriumsulfit, Dinatriumsalz der 2-Hydroxy-2-sulfinatoessigsäure, Dinatriumsalz der 2-Hydroxy-2-sulfonatoessigsäure, Natriumhydroxymethansulfinat, Ascorbinsäure und/oder Iso-Ascorbinsäure, wobei die Temperatur des wässrigen Mediums während der Polymerisation auf 5 bis 43 °C eingestellt wird und zu Beginn der Polymerisation die Temperatur des wässrigen Mediums maximal 28 °C beträgt.

In der Regel liegt das wässrige Medium in Form einer wässrigen Lösung vor.

Bevorzugt werden mindestens 45 Mol-%, besonders bevorzugt mindestens 80 Mol-%, aller Struktureinheiten des Copolymers durch Einpolymerisieren von Säuremonomer und Polyethermakromonomer erzeugt.

Die Erfindung betrifft außerdem ein Copolymer enthaltendes wässriges Medium, welches gemäß dem vorstehend beschriebenen Verfahren herstellbar ist.

Weiterhin betrifft die Erfindung die Verwendung des erfindungsgemäßen Copolymer enthaltenden wässrigen Mediums als Dispergiermittel für hydraulische Bindemittel oder für latenthydraulische Bindemittel, welche zusammen mit korrodierbaren metallischen Baumaterialen, insbesondere Stahl, eingesetzt werden.

Im Folgenden soll die Erfindung anhand von Ausführungsbeispielen näher erläutert werden.

### Synthesebeispiel

Anhand einer beispielhaften Polymersynthese soll gezeigt werden, dass dem erfindungsgemäßen Wasser ein wirtschaftliches Hochleistungsfließmittel hergestellt werden kann.

Das verwendete Wasser wies folgende Ionengehalte auf: Sulfat: 16,0 mg/L; Chlorid: 10,0 mg/l (beide Werte bestimmt durch lonenchromatographie, System der Firma Dionex, Säule IonPac ® AS18, Temperatur: 30 °C, Eluent: wässrige KOH-Lösung (39mM), Flußrate 1 mL/min, Kalibrierung mittels Standards); Magnesium: 9,8 mg/l (bestimmt durch optische Emmissionsspektroskopie mit ICP-OES" Ciros Vision" , Firma Spectro, (Parameter: Plasmaleistung 1400W, Fluß: Kühlgas 12 L/min, Hilfs- und Zerstäubergas je 1 L/min, Pumpstufe: 2, Kalibrierung mittels Standardlösungen (Bezug über Fa. Aldrich), Bezug auf Emissionslinien von Mg bei 279,553 und 280,270 nm).

### Synthesebeispiel Polymer 1

In einen Doppelwandreaktor - ausgestattet mit Rührer, pH-Elektrode und mehreren Zulaufeinrichtungen - wurden 336 g Wasser mit oben beschriebenen Ionengehalt und 348,00 g Vinyloxybutylpolyethylenglykol (Anlagerungsprodukt aus 129 Mol Ethylenoxid an 4-Hydroxybutyl-1-monovinylether) vorgelegt. Der Reaktorinhalt wird anschließend auf eine Temperatur von 25,0 °C gekühlt.

In einem separaten Zulaufgefäß werden 17,60 g Acrylsäure und 3,41 g Maleinsäureanhydrid mit 61,07 g Wasser (mit oben beschriebenen Ionengehalt) homogen vermischt und unter Kühlen 7,83 g einer 40 %igen Kaliumhydroxydlösung zugegeben.

Parallel wurde eine zweite Lösung bestehend aus 1,08 g Brüggolit ® FF6 (Handelsprodukt der Firma Brüggemann Chemicals GmbH) und 17,00 g Wasser hergestellt (Lösung B).

Nach erfolgtem Abkühlen der Vorlagemischung auf 25,0 °C werden 42,50 mL der Lösung A sowie 3,90 g 20 %ige Natronlauge und 0,21 g 3-Mercaptopropionsäure zur Vorlage gegeben. Anschließend werden zur verbleibenden Lösung A 1,88 g 3-Mercaptopropionsäure zugegeben, danach zur Vorlage 0,12 g Eisen-II-sulfat-Heptahydrat sowie 2,00 g Wasserstoffperoxid (30 % in Wasser) gegeben und die Reaktion gestartet. Zeitgleich wurde mit der Zugabe von Lösung A und Lösung B zur gerührten Vorlage begonnen.

Die Dosierraten der Lösung A kann folgenden Dosierprofils entnommen werden. Lösung B wird mit konstanter Dosierrate bis zum Ende der Dosierung von Lösung A in den Reaktor dosiert.

| t (min) | 0 | 2 | 4 | 8 | 10 | 12 | 14 | 16 | 18 | 22 | 26 | 30 |
|---|---|---|---|---|---|---|---|---|---|---|---|---|
| Lösung A (mL/h) | 129 | 144 | 149 | 144 | 129 | 106 | 87 | 69 | 54 | 33 | 21 | 0 |

Nach Beendigung der Reaktion wurde die erhaltene Polymerlösung mit 20 %iger Natriumhydroxid-Lösung auf einen pH-Wert von 6,5 eingestellt.

Man erhielt eine leicht gelbliche Polymerlösung, das Copolymer wies ein Gewichtsmittel der Molmasse von 53000 g/Mol (bestimmt mittels Gelpermeationschromatographie) auf.

### Anwendungsbeispiel:

Das anwendungstechnische Potenzial des Fließmittels kann durch Testen der Frischbetoneigenschaten bestimmt werden. Hierzu eine Betonmischung mit folgender Zusammensetzung verwendet:

| Komponente | Menge/kg/m³ |
|---|---|
| Zement CEM I 52,5 R | 400 |
| Sand 0 - 4 mm | 910 |
| Kies 4 - 16 mm | 980 |
| Wasser | Nach Bedarf |
| Fließmittel | Nach Bedarf |

Die Kies- und Sandmenge wurde aufgrund deren Körnung gemäß der Abbildung einer Fullersieblinie gewählt. Bei der Herstellung von Mischung 1 wurde kein Fließmittel verwendet, wobei die Wassermenge so eingestellt wurde, dass ein Anfangsausbreitmaß¹ von 60 ± 2cm erzielt wurde. Bei der Herstellung von Mischung 2 wurde eine Polymerdosierung von 0,14 %² angewendet und die Wassermenge ebenfalls zu Erzielung eines Anfangsausbreitmaßes von 60 ± 2 cm angepasst.

Das Mischprozedere war wie folgt: In einem Zwangsmischer wurden alle trockenen Komponenten sowie 30 % des verwendeten Wassers 1 Minute vorgemischt. Anschließend wurde der Rest des Wassers zugegeben und erneut gemischt (Mischung 1 : 2, 5 Minuten; Mischung 2 : 1 Minute). Bei der Herstellung von Mischung 2 wurde nach Mischen das Fließmittel zugegeben und anschließend 1,5 Minuten gemischt. Im Anschluss daran wurden die Frischbetoneigenschaften bestimmt:

Die Ergebnisse der Prüfung zeigt unten stehende Tabelle.

| Mischung | Fließmittel-Dosierung² | Wassermenge / kg·m⁻³ | Ausbreitmaß¹ / cm | Wasserreduktion / % |
|---|---|---|---|---|
| 1 | - | 212 | 59 | - |
| 2 | 0,14 % | 140 | 58 | 34 % |

| | | | | |
|---|---|---|---|---|
| ¹ Bestimmung nach DIN EN 12350-5, ² Dosierung in Gew.-% Polymerfeststoff bezogen auf die Zementeinwaage, | | | | |

Aus den Anwendungsbeispielen wird ersichtlich, dass Polymer 1, das mit dem erfindugsgemäßen Wasser mit niedrigem Ionengehalt an Magnesium, Chlorid und Sulfat hergestellt wurde, ein besonders leistungsfähiges und wirtschaftliches Dispergiermittel hergestellt werden kann. Insbesondere der niedrige Sulfatgehalt des verwendeten Wassers wirkt sich positiv auf die Dispergierwirkung und Dispergiergeschwindigkeit des Polymers 1, mittels geringen Polymerdosierungen kann die erforderliche Wassermenge um 34 % abgesenkt werden, wobei das gleiche Anfangsausbreitmaß erzielt wird.

## Patentansprüche

1. Verfahren zur Herstellung eines Copolymer enthaltenden wässrigen Mediums in einem Polymerisationsreaktor, welcher mit Säuremonomer, Polyethermakromonomer, Wasser sowie radikalischem Polymerisationsinitiator befüllt wird, so dass in dem Polymerisationsreaktor das wässrige Medium entsteht, in welchem Säuremonomer und Polyethermakromonomer unter Bildung des Copolymers durch radikalische Polymerisation umgesetzt werden, pro eingesetztem Mol Polyethermakromonomer insgesamt 1 bis 20 Mol Säuremonomer eingesetzt werden, das Gewichtsverhältnis von eingesetztem Polyethermakromonomer zu eingesetztem Wasser 5 : 1 bis 1 : 5 beträgt, wobei mindestens 70 Gew.-% des in dem Polymerisationsreaktor vorgelegten Wassers als in der Natur vorkommendes Wasser bereitgestellt wird, welches maximal 130 mg/l Magnesiumionen, maximal 350 mg/l Sulfat und maximal 200 mg/l Chlorid aufweist.

2. Verfahren nach Anspruch 1, **dadurch gekennzeichnet, dass** mindestens 80 Gew.-% des in dem Polymerisationsreaktor vorgelegten Wassers als in der Natur vorkommendes Wasser bereitgestellt wird, welches maximal 70 mg/l Magnesiumionen, maximal 100 mg/l Sulfat und maximal 100 mg/l Chlorid aufweist.

3. Verfahren nach Anspruch 1 oder 2, **dadurch gekennzeichnet dass** der Polymerisationsreaktor teilweise oder vollständig aus Stahl ausgebildet ist, welcher mit dem wässrigen Medium Kontakt hat.

4. Verfahren nach einem der Anspruch 1 bis 3, **dadurch gekennzeichnet, dass** durch die Umsetzung des Säuremonomers eine Struktureinheit im Copolymer erzeugt wird, die gemäß einer der allgemeinen Formeln (Ia), (Ib), (Ic) und/oder (Id) ist 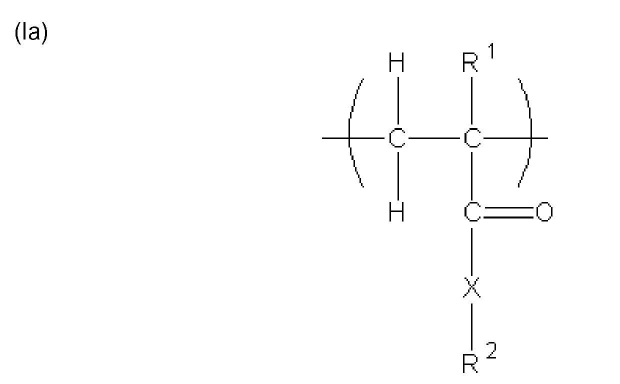 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 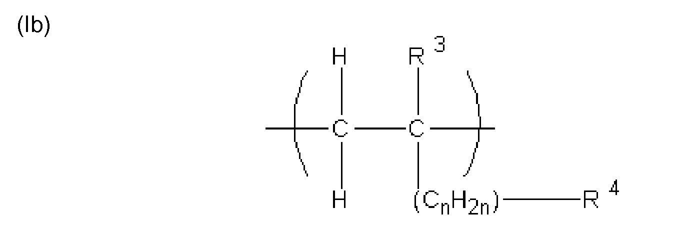 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 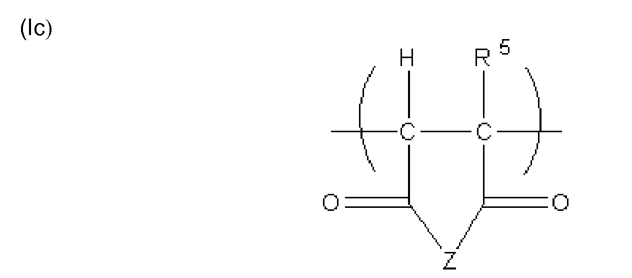 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 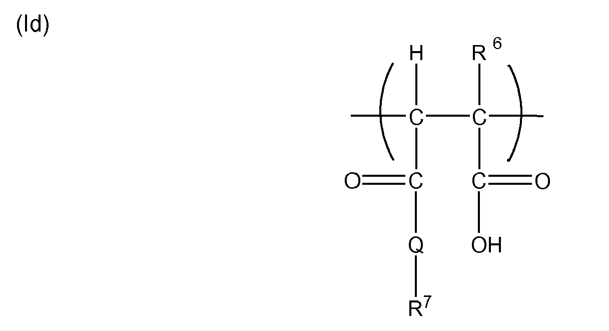 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

5. Verfahren nach einem der Ansprüche 1 bis 4, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

6. Verfahren nach einem der Ansprüche 1 bis 5, **dadurch gekennzeichnet, dass** durch die Umsetzung des Polyethermakromonomers eine Struktureinheit im Copolymer erzeugt wird, die gemäß einer der allgemeinen Formeln (IIa), (IIb) und/oder (IIc) ist 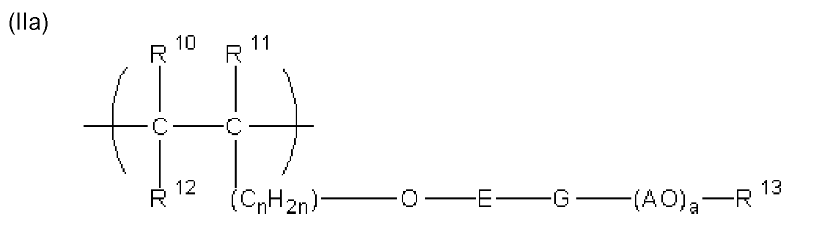 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 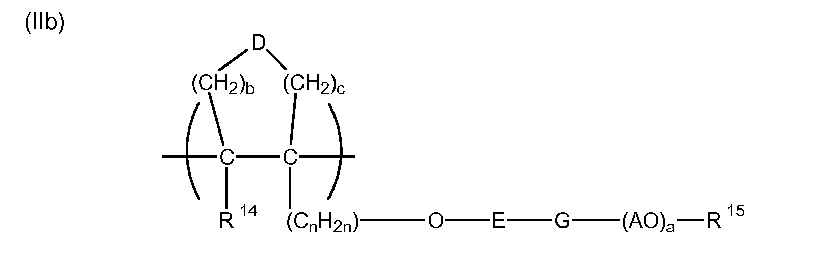 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 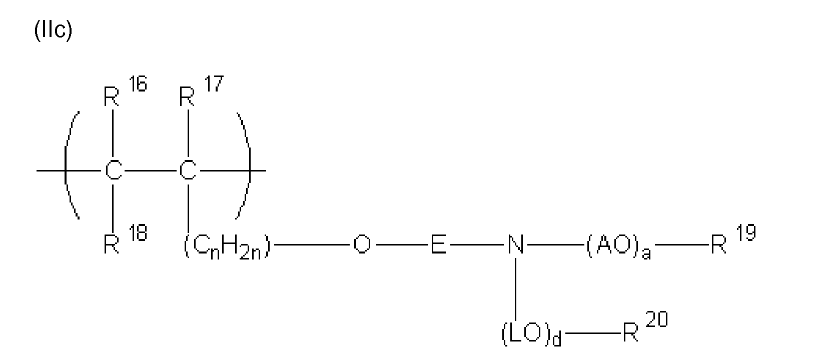 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

7. Verfahren nach einem der Ansprüche 1 bis 6, **dadurch gekennzeichnet, dass** als Polyethermakromonomer alkoxylierter Hydroxybutylvinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 300 eingesetzt wird.

8. Verfahren nach einem der Ansprüche 1 bis 7, **dadurch gekennzeichnet, dass** als radikalischer Polymerisationsinitiator ein H₂O₂ oder Alkaliperoxodisulfat enthaltendes Redoxinitiatorsystem eingesetzt wird, welches zusammen mit einem Reduktionsmittel verwendet wird, wobei das Reduktionsmittel bevorzugt vorliegt in Form von Natriumsulfit, Dinatriumsalz der 2-Hydroxy-2-sulfinatoessigsäure, Dinatriumsalz der 2-Hydroxy-2-sulfonatoessigsäure, Natriumhydroxymethansulfinat, Ascorbinsäure und/oder Iso-Ascorbinsäure, wobei die Temperatur des wässrigen Mediums während der Polymerisation auf 5 bis 43 °C eingestellt wird und zu Beginn der Polymerisation die Temperatur des wässrigen Mediums maximal 28 °C beträgt.

9. Verfahren nach einem der Ansprüche 1 bis 8, **dadurch gekennzeichnet, dass** das wässrige Medium in Form einer wässrigen Lösung vorliegt.

10. Verfahren nach einem der Ansprüche 1 bis 9, **dadurch gekennzeichnet, dass** insgesamt mindestens 45 Mol-%, bevorzugt mindestens 80 Mol-% aller Struktureinheiten des Copolymers durch Einpolymerisieren von Säuremonomer und Polyethermakromonomer erzeugt werden.

11. Copolymer enthaltendes wässriges Mediums herstellbar gemäß dem Verfahren nach einem der Ansprüche 1 bis 10.

12. Verwendung eines Copolymer enthaltenden wässrigen Mediums gemäß Anspruch 11 als Dispergiermittel für hydraulische Bindemittel oder für latenthydraulische Bindemittel, welche zusammen mit korrodierbaren metallischen Baumaterialen, insbesondere Stahl, eingesetzt werden.
